# EUROPÄISCHE PATENTSCHRIFT

(11) **EP 4 103 411 B1**
(45) Veröffentlichungstag und Bekanntmachung des Hinweises auf die Patenterteilung: **31.01.2024**
(21) Anmeldenummer: 20816968.0
(22) Anmeldetag: 30.11.2020
(51) Int. Cl.: B60C 19/00, B29B 17/02, B29B 17/04, B29L 30/00

(54) **FAHRZEUGLUFTREIFEN MIT GERÄUSCHABSORBER UND VERFAHREN ZUR DETEKTION EINES FAHRZEUGLUFTREIFENS MIT GERÄUSCHABSORBER SOWIE ZUM RECYCLING EINES FAHRZEUGLUFTREIFENS MIT GERÄUSCHABSORBER**
PNEUMATIC VEHICLE TIRE WITH NOISE ABSORBER, AND METHOD FOR DETECTING A PNEUMATIC VEHICLE TIRE WITH NOISE ABSORBER AND FOR RECYCLING A PNEUMATIC VEHICLE TIRE WITH NOISE ABSORBER
PNEUMATIQUE DE VÉHICULE AVEC ABSORBEUR DE BRUIT ET PROCÉDÉ DE DÉTECTION D'UN PNEUMATIQUE DE VÉHICULE AVEC ABSORBEUR DE BRUIT ET DE RECYCLAGE D'UN PNEUMATIQUE DE VÉHICULE AVEC ABSORBEUR DE BRUIT

(30) Priorität: 10.02.2020 DE 102020201585
(43) Veröffentlichungstag der Anmeldung: 21.12.2022
(73) Patentinhaber: Continental Reifen Deutschland GmbH, 30165 Hannover (DE)
(72) Erfinder: DOROSHENKO, Mikheil, 30165 Hannover (DE); TYBURSKI, Andreas, 30165 Hannover (DE)
(74) Vertreter: Continental Corporation
(86) Internationale Anmeldenummer: PCT/EP2020/083929
(87) Internationale Veröffentlichungsnummer: WO 2021/160310

(56) Entgegenhaltungen:
- EP-A1- 3 552 849
- EP-A2- 1 795 377
- DE-A1-102016 214 496
- DE-A1-102016 219 666

## Beschreibung

Die Erfindung betrifft einen Fahrzeugluftreifen mit wenigstens einem in seinem Inneren an der dem Laufstreifen gegenüberliegenden Innenfläche haftend angebrachten Geräuschabsorber. Die Erfindung betrifft ferner ein Verfahren zur Detektion eines Fahrzeugluftreifens mit Geräuschabsorber sowie ein Verfahren zum Recycling eines Fahrzeugluftreifens mit Geräuschabsorber.

Es ist bekannt Fahrzeugluftreifen mit Geräuschabsorbern auszustatten, um das Fahrgeräusch zu reduzieren. Meist ist der Geräuschabsorber in Form eines Schaumstoffrings ausgeführt, der die Luftschwingung im Reifen reduziert und somit zu einer Verbesserung des Geräuschverhaltens im Fahrzeug führt. Der Schaumstoffring kann aus offenzelligem Schaumstoff bestehen und wird auch als "Innenabsorber" bezeichnet. Der Geräuschabsorber ist beispielsweise ein Polyurethan-Schaumstoffring und somit aus anderen Materialien als die sonstigen Reifenbauteile.

Es können aber auch mehrere Geräuschabsorber angebracht sein, wie in der DE 102017210929 A1 oder EP 1 510 366 A1 offenbart.

DE 10 2016 219 666 A1 betrifft einen Fahrzeugluftreifen mit einem in seinem Inneren an der dem Laufstreifen gegenüberliegenden Innenfläche haftend angebrachten Geräuschabsorber, wobei der Geräuschabsorber an einem vorab aufgebrachten, selbsttätig abdichtenden Dichtmittel haftet, welches zumindest unmittelbar nach seinem Aufbringen eine zum Anhaften des Geräuschabsorbers erforderliche Klebrigkeit aufweist, dadurch gekennzeichnet, dass das Dichtmittel wenigstens ein Polyolefin mit einem Chlorgehalt von kleiner oder gleich 5 mg/kg enthält.

EP 3 552 849 A1 betrifft einen Fahrzeugluftreifen mit wenigstens einem in seinem Inneren an der dem Laufstreifen gegenüberliegenden Innenfläche haftend angebrachten Geräuschabsorber, wobei der wenigstens eine Geräuschabsorber an einem Klebemittel haftet, dadurch gekennzeichnet, dass das Klebemittel unter anderem einen regenerierten Kautschuk, wenigstens ein Polyolefin und wenigstens ein Kohlenwasserstoffharz enthält.

Beim Recycling der Fahrzeugluftreifen mit Geräuschabsorber stellt sich das Problem, dass vor der üblichen Zerkleinerung der Reifen eine Materialtrennung wünschenswert ist, also insbesondere der Geräuschabsorber abgetrennt werden sollte.

Dabei kann es je nach optischem Zustand des Geräuschabsorbers - dieser kann eine dunkle Farbe aufweisen und/oder verschmutzt sein - und den Lichtverhältnissen erschwert sein, Fahrzeugluftreifen mit Geräuschabsorber zu erkennen. Dies erschwert wiederum das Unterscheiden und Trennen von Fahrzeugluftreifen mit und ohne Geräuschabsorber, was wiederum das Recycling von Fahrzeugluftreifen vor dem Hintergrund der erwünschten Materialtrennung erschwert oder verlangsamt.

Der vorliegenden Erfindung liegt daher die Aufgabe zugrunde einen Fahrzeugluftreifen, mit wenigstens einem in seinem Inneren an der dem Laufstreifen gegenüberliegenden Innenfläche haftend angebrachten Geräuschabsorber, wobei der Geräuschabsorber eine nach radial einwärts gerichtete Oberfläche aufweist (Fahrzeugluftreifen mit Geräuschabsorber), bereitzustellen, der einfacher als Fahrzeugluftreifen mit Geräuschabsorber erkannt werden kann und somit leichter von Fahrzeugluftreifen ohne Geräuschabsorber unterschieden werden kann.

Gelöst wird die Aufgabe dadurch, dass auf der nach radial einwärts gerichteten Oberfläche des Geräuschabsorbers wenigstens ein Lumineszenzagens aufgebracht ist.

Dadurch dass Fahrzeugluftreifen mit Geräuschabsorber auf der nach radial innen gerichteten Oberfläche des Geräuschabsorber wenigstens ein Lumineszenzagens aufweisen, können die Reifen einfacher von Fahrzeugluftreifen ohne Geräuschabsorber unterschieden werden.

Insbesondere kann die Unterscheidung in einem automatisierten Verfahren mit einem Detektor, insbesondere einer Photodiode, erfolgen, ohne dass eine individuelle Sichtung des Reifens durch einen Operator notwendig ist.

Ferner kann aber auch ein Operator einen derartigen Reifen mit Geräuschabsorber durch das Lumineszenzagens schneller und eindeutiger erkennen.

Dadurch ist das Recycling von Reifen mit (und ohne) Geräuschabsorber deutlich vereinfacht und erleichtert.

Die Vorgänge der Detektion mittels Detektors und Erkennung durch einen Operator werden im Rahmen der vorliegenden Erfindung beide mit "Detektieren" bezeichnet.

Dadurch, dass lediglich die Oberfläche des Geräuschabsorbers mit einem Lumineszenzagens versehen ist, können die Reifen voneinander unterschieden werden, ohne dass es notwendig ist, den gesamten Geräuschabsorber lumineszierend auszugestalten.

Im Folgenden wird die Erfindung weiter erläutert und weitere vorteilhafte Ausführungsformen beschrieben. Soweit nicht anders angegeben oder technisch nicht machbar, können verschiedene Ausführungsformen auch miteinander kombiniert werden.

Unter "Lumineszenzagens" wird eine Substanz / ein Agens verstanden, welches lumineszierende Eigenschaften aufweist. Derartige Substanzen sind auch unter dem Begriff "Fluorophore" bekannt.

Gemäß Römpp Online Chemie Lexikon (letzte Aktualisierung August 2008) versteht man "unter Lumineszenz ... die Emission von Licht im sichtbaren, UV- und IR-Spektralbereich von Gasen, Flüssigkeiten und Festkörpern nach Energiezufuhr".

Je nach Art der Energiezufuhr kann man beispielsweise zwischen Photolumineszenz, Chemilumineszenz, Thermolumineszenz und Radiolumineszenz unterscheiden.

Arten der Lumineszenz, die insbesondere durch Photolumineszenz verursacht werden, sind ferner Fluoreszenz und Phosphoreszenz, wobei nach der zeitlichen Dauer zwischen Anregung (Absorption von Licht) und der Lumineszenz ((Nach)Leuchten durch Emission) unterschieden wird.

Im Rahmen der vorliegenden Erfindung soll das "Lumineszenzagens" nicht von vornherein durch eine (formelle) Unterscheidung der verschiedenen Lumineszenzarten hinsichtlich Art der Anregung oder der Dauer der Emission eingeschränkt sein.

Gemäß vorteilhafter Ausführungsformen der Erfindung ist es bevorzugt, dass Lumineszenzagens durch Licht anregbar ist und damit als Photolumineszenzagenz bezeichnet werden kann. Ferner ist es bevorzugt, dass das Lumineszenzagens fluoreszierende oder phosphoreszierende Eigenschaften aufweist und damit ein Fluoreszenzagens oder Phosphoreszenzagens ist.

Gemäß vorteilhafter Ausführungsformen der Erfindung ist es bevorzugt, dass das Lumineszenzagens Licht im Wellenlängenbereich von 200 bis 700 nm absorbiert und im Bereich von 350 bis 800 nm emittiert. Hierdurch kann es mit UV-Licht oder sichtbarem Licht angeregt werden und Licht in einem Bereich emittieren, der für Menschen sichtbar ist und/oder mittels einer Photodiode gemessen und damit detektiert werden kann.

Bei dem das Lumineszenzagens kann es sich prinzipiell um jegliche Substanz handeln, die lumineszierende Eigenschaften aufweist, und dabei beispielsweise ausgewählt ist aus der Gruppe umfassend
Kumarin-Derivate, wie Methoxykumarin,
Peptide oder Proteine, wie das grün fluoreszierende Protein (Abkürzung GFP; *engl. "*green fluorescent protein"),
Rhodamine,
organische Substanzen, die unter den Handelsnamen Alexa Fluor ^{®} erhältlich sind, wie zum Beispiel Alexa Fluor ^{®} 350, Alexa Fluor ^{®} 405, Alexa Fluor ^{®} 488, Alexa Fluor ^{®} 532, etc,
Quantenpunkte (*engl.* "quantum dots"), wie zum Beispiel QDOT ^{®} 525, QDOT ^{®} 565, QDOT ^{®} 665.

Insbesondere können sämtliche unter folgenden Quellen offenbarte Agenzien verwendet werden:
https://docs.abcam.com/pdf/immunology/fluorochrome guide.pdf
https://www.biosyn.com/Images/ArticleImages/Comprehensive%20fluorophore%20list.pd f
https://en.wikipedia.org/wiki/Fluorophore
https://en.wikipedia.org/wiki/Ethidium bromide

Für den Fall, dass es sich bei dem Lumineszenzagens um ein Molekül handelt, beträgt das Gewichtsmittel des Molekulargewichtes (Mw) beispielsweise und insbesondere von 200 bis 250.000 g/mol.

Für den Fall, dass es sich bei dem Lumineszenzagens um Quantenpunkte handelt, beträgt die Teilchengröße (gemessen mit dynamischer Lichtstreuung) beispielsweise von 2 bis 2000 nm.

Erfindungswesentlich ist, dass der Geräuschabsorber auf seiner radial nach innen gerichteten Oberfläche wenigstens ein Lumineszenzagens aufweist.

Hierbei können auch zwei oder mehrere verschiedene Agenzien vorhanden sein. "Wenigstens ein" bezieht sich auf die Art des Lumineszenzagens. Sämtliche Ausführungen gelten sowohl für das Vorhandensein einer Art an Lumineszenzagens oder zwei oder mehreren Arten an Lumineszenzagenzien, sofern nicht ausdrücklich anders dargestellt.

Dabei können bereits geringste Mengen die erwünschte lumineszierende Wirkung haben.

Unter dem Ausdruck "nach radial einwärts gerichtete Oberfläche" ist eine Position zu verstehen, die nicht die Oberfläche, mit der der Geräuschabsorber an der Reifeninnenseite haftet ist, sondern insbesondere in Richtung des Reifeninneren, in radialer Richtung vom Laufstreifen weg, auf dem Geräuschabsorber angeordnet ist.

Im Fall von einzelnen Blöcken mehrerer Geräuschabsorber ist jegliche nach innen gerichtete, nicht an dem Reifeninneren anhaftende Fläche gemeint.

Hierbei muss nicht die gesamte nach radial innen gerichtete Oberfläche mit dem Lumineszenzagens bedeckt sein.

Dabei kann bereits die Bedeckung eines vergleichsweise geringen Anteils der Oberfläche die erwünschte lumineszierende Wirkung haben.

Gemäß vorteilhafter Ausführungsformen der Erfindung bedeckt das Lumineszenzagens 0,01 bis 100 %, bevorzugt 0,01 bis 90 %, besonders bevorzugt 1 bis 80 %, beispielsweise 1 bis 10 % der nach radial einwärts gerichteten Oberfläche des Geräuschabsorbers.

Gemäß vorteilhafter Ausführungsformen ist das Lumineszenzagens umlaufend in Form eines oder mehrerer Streifen(s) angeordnet, wobei der oder die Streifen durchgängig oder unterbrochen sein kann/können. Ein oder mehrere Streifen lassen sich auf einfache und automatisierte Weise umlaufend durchgängig oder abschnittsweise aufbringen.

Zwei oder mehr Streifen sind beispielsweise parallel oder nicht parallel zueinander angeordnet.

Gemäß vorteilhafter Ausführungsformen ist das Lumineszenzagens in einzelnen räumlichen (d. h. voneinander abgetrennten) Bereichen auf der Oberfläche des Geräuschabsorbers angeordnet. Die Bereiche können systematisch oder zufällig (statistisch) verteilt sein.

Bereits geringste Mengen in im Verhältnis zur Oberfläche kleinen Bereichen mit einem Durchmesser kleiner als 1 mm können bereits den technischen Vorteil hervorrufen, dass die Reifen detektiert und somit leichter von Reifen ohne Geräuschabsorber und Lumineszenzagens unterschieden werden können.

Gemäß einer weiteren Ausführungsform der Erfindung bedeckt das Lumineszenzagens 90 bis 100 %, beispielsweise 100 % der nach radial einwärts gerichteten Oberfläche des Geräuschabsorbers.

Bei der Detektion kann es ggf. hilfreich sein, dass der Reifen und/oder die Anregungsquelle und ggf. der Detektor rotiert wird.

Im Folgenden werden verschiedene Ausführungsformen beschrieben, wie das Lumineszenzagens auf die Geräuschabsorberoberfläche aufgebracht werden kann. Sämtliche Ausführungsformen sind mit den beschriebenen möglichen Anordnungen und der sich ergebenden Bedeckung der Oberfläche des Geräuschabsorbers kombinierbar.

Gemäß vorteilhafter Ausführungsformen der Erfindung ist das Lumineszenzagens mittels einer Dispersion, insbesondere Suspension oder Emulsion, auf die Oberfläche des Geräuschabsorbers aufgetragen, wobei die Dispersion von 1 bis 80 Gew.-%, bevorzugt von 5 bis 50 Gew.-%, besonders bevorzugt von 10 bis 30 Gew.-%, ganz besonders bevorzugt 20 bis 30 Gew.-%, an Lumineszenzagenzien enthält.

Die Angabe in Gew.-% bezieht sich auf die Gesamtmasse der Dispersion vor dem Trocknen.

In der Dispersion ist gemäß vorteilhafter Ausführungsformen wenigstens ein Bindemittel, wie Polystyrol oder Poly-methylmetacrylat oder Styrol-Acrylat-Copolymer oder Polyvinylacetat, enthalten.

Bevorzugt handelt es sich bei der Dispersion um eine Suspension. Das oder die Lumineszenzagenzien sind gemäß dieser Ausführungsform in einer Flüssigkeit suspendiert.

Die Angabe in Gew.-% bezieht sich auf die Gesamtmasse der Suspension vor dem Trocknen.

Eine Suspension lässt sich einfach und materialsparend auftragen.

Die Flüssigkeit der Suspension kann jede denkbare Flüssigkeit sein, die mit dem jeweiligen Geräuschabsorber kompatibel ist. Gemäß vorteilhafter Ausführungsformen der Erfindung handelt es sich um eine wässrige Suspension, welche besonders umweltfreundlich ist.

Gemäß weiterer vorteilhafter Ausführungsformen der Erfindung ist das Lumineszenzagens mittels einer Lösung auf die Oberfläche des Geräuschabsorbers aufgetragen, wobei die Lösung wenigstens ein Lösungsmittel und von 1 bis 80 Gew.-%, bevorzugt von 5 bis 50 Gew.-%, besonders bevorzugt von 10 bis 30 Gew.-%, ganz besonders bevorzugt 20 bis 30 Gew.-%, an Lumineszenzagenzien enthält.

Die Lumineszenzagenzien sind gemäß dieser Ausführungsform in einer Flüssigkeit gelöst. Die Angabe in Gew.-% bezieht sich auf die Gesamtmasse der Lösung vor dem Trocknen.

Auch in der Lösung ist gemäß vorteilhafter Ausführungsformen wenigstens ein Bindemittel, wie Polystyrol oder Poly-methylmetacrylat oder Styrol-Acrylat-Copolymer oder Polyvinylacetat, enthalten.

Eine Lösung lässt sich einfach auftragen.

Das oder die Lösungsmittel kann/können jede denkbare Flüssigkeit sein, die mit dem jeweiligen Geräuschabsorber kompatibel ist/sind.

Gemäß vorteilhafter Ausführungsformen der Erfindung handelt es sich um eine wässrige Lösung, welche besonders umweltfreundlich und nicht brennbar ist.

Das Lumineszenzagens ist gemäß vorteilhafter Ausführungsformen wasserlöslich.

Gemäß vorteilhafter Ausführungsformen ist es bevorzugt, dass die Flüssigkeit der Lösung oder Dispersion, wie insbesondere Suspension oder Emulsion, Wasser umfasst, was insbesondere die oben genannten Vorteile hat.

Das Lumineszenzagens ist gemäß vorteilhafter Ausführungsformen hydrophil und in Wasser gelöst oder hydrophob und in Wasser dispergiert oder teilweise in Wasser gelöst.

Gemäß weiterer vorteilhafter Ausführungsformen der Erfindung handelt es sich um wenigstens ein organisches Lösungsmittel. Das organische Lösungsmittel kann prinzipiell jedes dem Fachmann bekannte geeignete Lösungsmittel sein, wie Alkohole (Einfach- oder Mehrfachalkohole), Ketone, Ester, Aldehyde, Aromaten, Alkaen wie Hexan, oder Ether, wie Petrolether.

Das organische Lösungsmittel ist gemäß bevorzugter Ausführungsformen ausgewählt aus Lösungsmitteln, die mit dem Geräuschabsorber und den übrigen Reifenbauteilen kompatibel sind bzw. diese nicht aufquellen lassen oder die Bestandteile lösen, wie insbesondere einfache Alkohole, wie Ethanol oder Isopropanol. Diese sind zudem vergleichsweise umweltfreundlich und die meisten wasserunlöslichen Lumineszenzagenzien sind darin gut lösbar.

Gemäß weiterer vorteilhafter Ausführungsformen der Erfindung ist das Lumineszenzagens als Feststoff, insbesondere in Pulverform, aufgetragen.

Das Pulver kann mittels Luftzerstäubung, beispielsweise mittels Pistole, oder elektrostatisch aufgetragen sein.

Je nach Art des Geräuschabsorbers, kann es vorteilhaft sein vor dem Auftragen des Feststoffes, insbesondere Pulvers, eine Haftschicht aufzubringen.

Gemäß weiterer vorteilhafter Ausführungsformen der Erfindung ist das Lumineszenzagens als Bestandteil einer Folie auf der nach radial einwärts gerichteten Oberfläche des Geräuschabsorbers angebracht. Auch eine Folie lässt sich einfach und materialsparend und insbesondere mit konstanter Schichtdicke auftragen.

Gemäß vorteilhafter Ausführungsformen ist das Lumineszenzagens mit einer Schichtdicke (gemessen in radialer Richtung (rR) senkrecht zur axialen Richtung (aR) des Fahrzeugreifens) von 100 nm (Nanometer) bis 3500 µm (Mikrometer)aufgetragen. Gemäß vorteilhafter Ausführungsformen der Erfindung beträgt die Schichtdicke von 1 bis 400 µm (Mikrometer), besonders bevorzugt 5 µm bis 100 µm.

Gemäß weiterer vorteilhafter Ausführungsformen der Erfindung beträgt die Schichtdicke 2500 bis 3500 µm (Mikrometer). Gemäß dieser Ausführungsform können beispielsweise Streifen (Sticker) mit den Maßen 100mm x 10mm x 3 mm verwendet werden.

Durch die beschriebenen Schichtdicken und Ausführungsformen kann der Geräuschabsorber möglichst materialsparend lumineszierend markiert werden.

Der Geräuschabsorber ist gemäß vorteilhafter Ausführungsformen der Erfindung schwarz oder nahezu schwarz. Dies bedeutet, dass der Geräuschabsorber beispielsweise einen Farbton gemäß den RAL-Farbcodes 9004 bis 9007, 9011, 9017 bis 9023 aufweist. Der Geräuschabsorber kann auch braun oder grau sein.

Bei dem Geräuschabsorber des erfindungsgemäßen Fahrzeugluftreifens kann es sich prinzipiell um jedes Element oder jede Kombination von Elementen handeln, welches bzw. welche in einem Fahrzeugluftreifen auf seiner Innenfläche durch Haftung angebracht werden kann/können und welches/welche die Geräuschemission des Reifens im Fahrbetrieb reduziert/reduzieren.

Gemäß einer bevorzugten Ausführungsform ist der wenigstens eine Geräuschabsorber wenigstens ein poröses Dämpfungselement. Poröse Materialien weisen insbesondere den Vorteil auf, dass sie neben der Geräuschabsorption zugleich ein nicht zu hohes Eigengewicht in den Reifen einbringen, sodass die Rollwiderstandseigenschaften des Reifens nicht unnötig verschlechtert werden.

Das poröse Material, aus dem das Dämpfungselement ausgebildet ist, ist beispielsweise ausgewählt aus der Gruppe enthaltend Polyurethan, insbesondere Polyurethanschäume auf einer Polyetherbasis und/oder Polyurethanschäume auf einer Polyesterbasis mit einer Dichte von 18 bis 300 kg/m³, bevorzugt 30 bis 35 kg/m³, und einer Härte von 6,5 kilo-pascal, Polyester mit einer Dichte von 18 bis 300 kg/m³ bevorzugt 30 bis 35 kg/m³, und einer Härte von 6,5 kilo-pascal, Polyether, sowie beliebige poröse, schallabsorbierende Materialienmischungen, wie beispielsweise Glas- oder Steinwolle, Schlingenware oder Hochflor oder Vliesmaterialien oder Kork. Weitere mögliche poröse Materialien, die sich für die Nutzung als Dämpfungselement eignen, sind beispielsweise ein Melaminharzschaum oder ein Bauschaum.

Besonders bevorzugt enthält der Geräuschabsorber, bevorzugt wenigstens ein poröses Dämpfungselement, wenigstens ein Polyurethan. Polyurethan ist aufgrund seiner spezifischen Dichte und sonstigen Materialbeschaffenheit sowie Verfügbarkeit besonders geeignet.

Gemäß einer besonders vorteilhaften Ausführungsform ist das poröse Dämpfungselement ein in Umlaufrichtung geschlossener oder geöffneter schallabsorbierender Schaumstoffring. Dieser sorgt für eine gleichmäßige Schallabsorption und der Reifen behält seine Gleichförmigkeit. Der Ring kann dabei in Umlaufrichtung geschlossen sein oder in geöffneter Form als Streifen vorliegen, wobei sich die Enden des Streifens berühren können aber nicht müssen oder aber auch überlappen können.

Der Schaumstoff des Schaumstoffringes ist bevorzugt ein offenzelliger Schaumstoff, da dieser am besten dazu geeignet ist, Schall zu absorbieren.

Besonderes bevorzugt ist der Geräuschabsorber ein geschlossener schallabsorbierender Schaumstoffring aus Polyurethan, dabei besonders bevorzugt ein Polyurethanschaum auf Polyetherbasis.

Derartige Schäume sind dem Fachmann bekannt.

Darüber hinaus können der Geräuschabsorber bzw. die Geräuschabsorber eine beliebige Form aufweisen, wie. z.B. einzelne Elemente in Form von Blöcken, Streifen oder ähnlichem, die beliebig miteinander kombiniert werden können.

Der oder die Geräuschabsorber sind bevorzugt mittels eines Klebemittels haftend an die Reifeninnenseite angebracht. Beispielhafte Klebemittel und Kombinationen von Klebemitteln sind: ein Klebeband und/oder ein silikonbasierter Kleber und/oder ein ZweiKomponenten-Kleber und/oder ein Baukleber und/oder ein Polyurethan-Kleber und/oder ein kautschukbasierter Kleber und/oder ein Reifenreparaturkleber und/oder ein Sekundenkleber und/oder ein Kleber basierend auf Cyanacrylat und/oder basierend auf einem wasserbasierten Acryl-System mit einer Polyethylenterephthalat-Struktur und/oder basierend auf Acryl-Nitril-Butadien-Kautschuk in Verbindung mit einem in Aceton gelösten Formaldehyd-Harz und/oder basierend auf einem Silan-Polyether und/oder basierend auf einem mit Butyl-Kautschuk vernetzten Polybuten und/oder basierend auf einem Alkoxy-Silikon.

Derartige Klebemittel weisen insbesondere den Vorteil auf, dass sie in einer derartig geringen Menge aufgetragen werden können, sodass sie nach der Anhaftung ausgehärtet sind. Hierdurch sind sie nach dem Entfernen des Geräuschabsorbers und vor dem Zerkleinern beim Recycling der Reifen nicht klebrig, sodass die Reifen ohne Geräuschabsorber auf bekannte Weise zerkleinert werden können.

Der Geräuschabsorber wird mittels dem Fachmann bekannten Verfahren und Vorrichtungen auf die Reifeninnenseite aufgebracht.

Das Lumineszenzagens wird je nach seiner Art auf die nach radial innen gerichtete Oberfläche des Geräuschabsorbers aufgebracht. Insbesondere kann sie als Suspension, Emulsion oder Lösung aufgetragen werden.

Ein weiterer Gegenstand der Erfindung ist ein Verfahren zur Detektion eines erfindungsgemäßen Fahrzeugluftreifens zum Unterscheiden von Fahrzeugluftreifen aufweisend einen Geräuschabsorber gegenüber Fahrzeugluftreifen ohne Geräuschabsorber. Bei dem erfindungsgemäßen Verfahren wird der Geräuschabsorber aufgrund des Lumineszenzagenzes von einem Operator oder mittels eines Detektors detektiert.

Bei dem Detektor kann es sich insbesondere um einer Photodiode handeln.

Geeignete Detektoren sind dem Fachmann bekannt und sind üblicherweise computerunterstützt.

Es kann sich ferner um ein Handgerät handeln oder einen Detektor, der in einem automatisierten Verfahren über einen Roboter verwendet wird.

Ein weiterer Gegenstand der Erfindung ist ein Verfahren zum Recycling von erfindungsgemäßen Fahrzeugluftreifen umfassend wenigstens die folgenden Verfahrensschritte:
A) Bereitstellung des zu recycelnden Fahrzeugluftreifens;
B) Durchführung des erfindungsgemäßen Verfahrens zur Detektion eines erfindungsgemäßen Fahrzeugluftreifens aufgrund der Lumineszenz;
C) Abtrennen des Geräuschabsorbers von dem Fahrzeugluftreifen;
D) anschließende Zerkleinerung des Fahrzeugluftreifens ohne Geräuschabsorber.

Gemäß vorteilhafter Ausführungsformen erfolgen die Verfahrensschritte A) bis D) automatisiert.

Ein weiterer Gegenstand der Erfindung ist ein Verfahren zum Recycling von Fahrzeugluftreifen umfassend wenigstens die folgenden Verfahrensschritte:
a) Bereitstellung von zu recycelnden Fahrzeugluftreifen;
b) Durchführung des erfindungsgemäßen Verfahrens zur Detektion eines erfindungsgemäßen Fahrzeugluftreifens, um Fahrzeugluftreifen mit Geräuschabsorber von Fahrzeugluftreifen ohne Geräuschabsorber zu unterscheiden;
c) Räumliche Separation von Fahrzeugluftreifen aufweisend ein Geräuschabsorber von Fahrzeugluftreifen ohne Geräuschabsorber;
d) Recycling von Fahrzeugluftreifen ohne Geräuschabsorber umfassend die Zerkleinerung der Fahrzeugluftreifen;
e) Überführung von Fahrzeugluftreifen aufweisend ein Geräuschabsorber zu einem separaten Recycling-Prozess umfassend das Abtrennen des Geräuschabsorber und erst die anschließende Zerkleinerung der Fahrzeugluftreifen.

Gemäß vorteilhafter Ausführungsformen erfolgen die Verfahrensschritte a) bis e) automatisiert. Gemäß einer vorteilhaften Ausführungsform der Erfindung, erfolgt Schritt c) in Verbindung mit Schritt b) automatisiert.

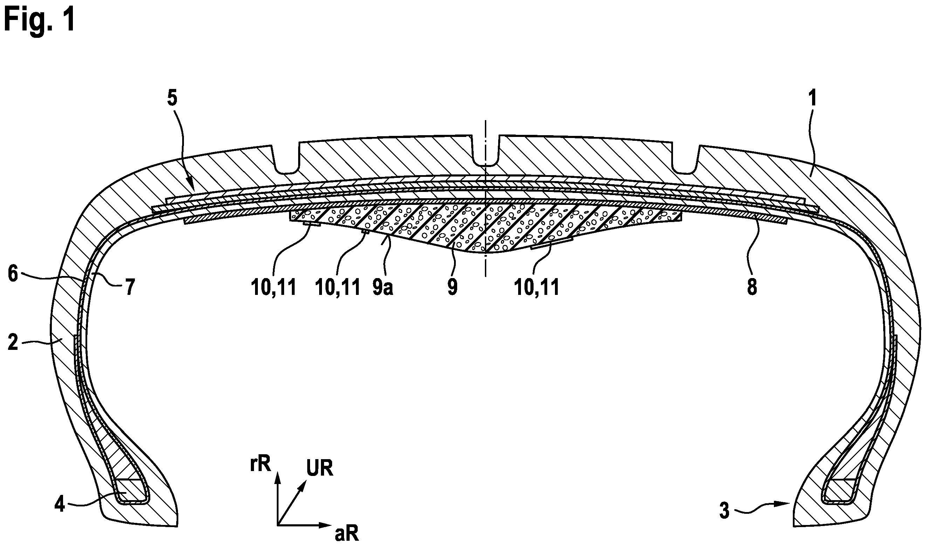

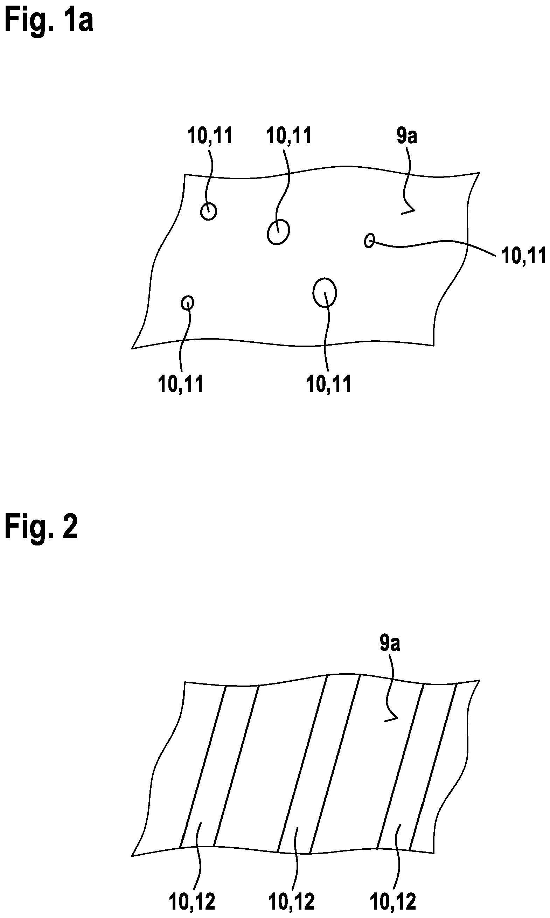

Weitere Einzelheiten der Erfindung werden anhand der Figur 1, die eine schematische Darstellung eines Ausführungsbeispiels ist, näher erläutert.

Im Folgenden soll die Erfindung anhand von Ausführungsbeispielen näher erläutert werden. Ein Beispiel eines erfindungsgemäßen Fahrzeugluftreifens ist in Figur 1 im Rahmen einer schematischen Darstellung gezeigt.

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und eine Karkasseinlage 6 aufweist. An seiner inneren Fläche ist der Reifen mit einer Innenschicht 7 aus einer luftdicht ausgeführten Gummimischung bedeckt. An der dem Laufstreifen 1 gegenüberliegenden inneren Oberfläche der Innenschicht 7 ist nachträglich (beim fertigen Reifen) ein schallabsorbierender Schaumstoffring als Geräuschabsorber 9 mittels eines Klebemittels 8, beispielsweise ein Polyurethan basiertes Klebemittel 8, haftend aufgebracht.

Der schallabsorbierende Schaumstoffring ist bezüglich seiner schallabsorbierenden Eigenschaften auf die Reifenhohlraumfrequenz abgestimmt. Der Geräuschabsorber 9 in Form eines Schaumstoffrings weist beispielsweise hier einen etwa langgestreckt dreieckförmigen, bezüglich des Reifenäquators symmetrischen Querschnitt auf.

Der Schaumstoff des Schaumstoffringes ist ein offenzelliger Schaumstoff, da dieser besonders gut geeignet ist, Schall zu absorbieren. Der Schaumstoff umfasst beispielsweise Polyurethan.

Der Geräuschabsorber 9 weist eine nach radial einwärts gerichtete Oberfläche 9a auf.

Gemäß dem Beispiel in Figur 1 ist auf der nach radial einwärts gerichteten Oberfläche 9a des Geräuschabsorbers 9 wenigstens ein Lumineszenzagens 10 aufgebracht. Beispielsweise ist das Lumineszenzagens 10 in einer Lösung oder Suspension aufgetragen. Die Flüssigkeit der Lösung oder Suspension ist beispielsweise Wasser, wobei als Bindemittel ferner Styrol-Acrylat-Copolymer enthalten ist.

Das Lumineszenzagens 10 kann jedes der oben genannten Agenzien sein, welches in Wasser lösbar oder suspensierbar ist, wie z. B. Rhodamine 6G.

Der Geräuschabsorber 9 ist damit an der nach innen gerichtete Oberfläche 9a somit lumineszierend. Die Flüssigkeit der Suspension ist beispielsweise Wasser, wobei als Bindemittel ferner Styrol-Acrylat-Copolymer enthalten sein kann.

Das Lumineszenzagens 10 bedeckt beispielsweise 5% Oberfläche 9a des Geräuschabsorbers 9.

Das Lumineszenzagens 10 ist gemäß Figur 1 in einzelnen räumlichen Bereichen 11 statistisch verteilt aufgebracht, was in Fig 1a nochmal aus der Draufsicht illustriert ist. Fig 1a zeigt dabei einen schematischen Ausschnitt der Draufsicht auf die nach radial innen gerichteten Oberfläche 9a.

In Fig. 2 ist ebenfalls ein schematischer Ausschnitt der Draufsicht auf die nach radial innen gerichteten Oberfläche 9a gezeigt. Gemäß Figur 2 ist das Lumineszenzagens 10 in Form mehrerer paralleler Streifen 12 aufgebracht. Es können beispielsweise drei (s. Fig. 2) oder vier Streifen (in den Figuren nicht gezeigt) sein.

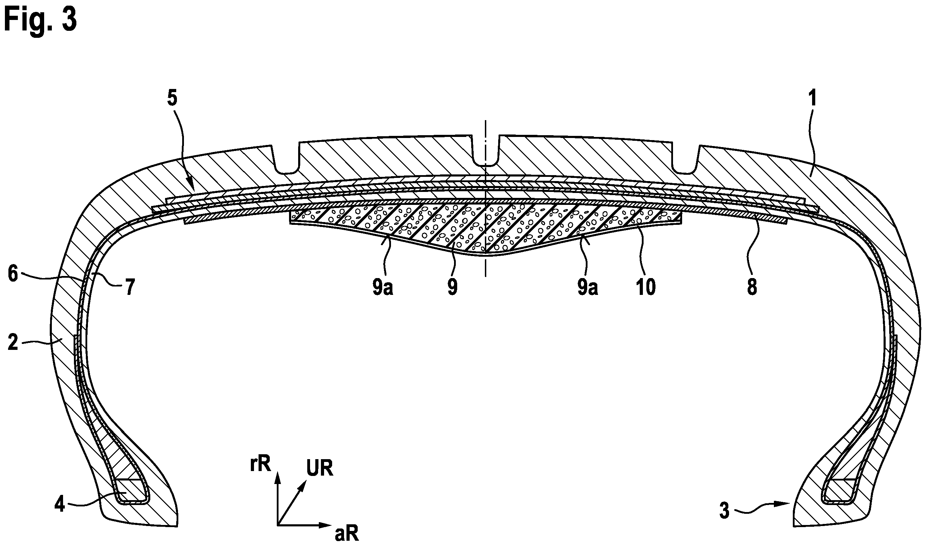

Gemäß Figur 3 bedeckt das Lumineszenzagens 10 nahezu die gesamte Oberfläche 9a.

Nach Anregung, insbesondere durch Licht im Wellenlängenbereich von 200 bis 700 nm, kann die Lumineszenz durch Emission von Licht im Wellenlängenbereich von 350 bis 800 nm entweder durch einen Operator erkannt oder mittels einer Photodiode detektiert werden.

Der beispielhaft beschriebene Fahrzeugluftreifen kann nun gemäß dem erfindungsgemäßen Verfahren von Fahrzeugluftreifen ohne Geräuschabsorber aufgrund der Lumineszenz durch eine Photodiode unterschieden werden.

Hierdurch können erfindungsgemäße Fahrzeugluftreifen mit Geräuschabsorber und Fahrzeugluftreifen ohne Geräuschabsorber in einem erfindungsgemäßen beispielsweise automatisierten Verfahren voneinander unterschieden, räumlich separiert und unterschiedlichen Recycling-Verfahren zugeführt werden. Dabei werden beim erfindungsgemäßen Reifen zunächst in einem zusätzlichen Schritt Geräuschabsorber umfassend Lumineszenzagens vom Reifen entfernt.

### Bezugszeichenliste

### (Teil der Beschreibung)

- 1: Laufstreifen
- 2: Seitenwand
- 3: Wulstbereich
- 4: Wulstkern
- 5: Gürtelverband
- 6: Karkasseinlage
- 7: Innenschicht
- 8: Klebemittel
- 9: Geräuschabsorber
- 9a: nach radial innen gerichtete Oberfläche des Geräuschabsorbers
- 10: Lumineszenzagens
- 11: einzelne räumliche Bereiche
- 12: Streifen

- rR: radiale Richtung
- aR: axiale Richtung
- UR: Umlaufrichtung des Reifens

## Patentansprüche

1. Fahrzeugluftreifen, mit wenigstens einem in seinem Inneren an der dem Laufstreifen (1) gegenüberliegenden Innenfläche haftend angebrachten Geräuschabsorber (9), wobei der Geräuschabsorber (9) eine nach radial einwärts gerichtete Oberfläche (9a) aufweist,
**dadurch gekennzeichnet, dass** auf der nach radial einwärts gerichteten Oberfläche (9a) des Geräuschabsorbers (9) wenigstens ein Lumineszenzagens (10) aufgebracht ist.

2. Fahrzeugluftreifen nach Anspruch 1, **dadurch gekennzeichnet, dass** das Lumineszenzagens ein Fluoreszenzagens oder Phosphoreszenzagens ist.

3. Fahrzeugluftreifen nach einem der vorherigen Ansprüche, **dadurch gekennzeichnet, dass** das Lumineszenzagens Licht im Wellenlängenbereich von 200 bis 700 nm absorbiert und im Bereich von 350 bis 800 nm emittiert.

4. Fahrzeugluftreifen nach einem der vorherigen Ansprüche, **dadurch gekennzeichnet, dass** das Lumineszenzagens (10) mittels einer Dispersion, insbesondere Suspension oder Emulsion, oder einer Lösung auf die Oberfläche (9a) des Geräuschabsorbers (9) aufgetragen ist, wobei die Dispersion oder die Lösung von 1 bis 80 Gew.-% an Lumineszenzagenzien enthält.

5. Fahrzeugluftreifen nach einem der vorherigen Ansprüche, **dadurch gekennzeichnet, dass** das Lumineszenzagens (10) 0,01 bis 100 % der nach radial einwärts gerichteten Oberfläche (9a) des Geräuschabsorbers (9) bedeckt.

6. Fahrzeugluftreifen nach einem der Ansprüche 1 bis 3, **dadurch gekennzeichnet, dass** das Lumineszenzagens (10) als Bestandteil einer Folie auf der nach radial einwärts gerichteten Oberfläche (9a) des Geräuschabsorbers (9) angebracht ist.

7. Fahrzeugluftreifen nach einem der vorherigen Ansprüche, **dadurch gekennzeichnet, dass** der wenigstens eine Geräuschabsorber (9) wenigstens ein poröses Dämpfungselement ist.

8. Fahrzeugluftreifen nach Anspruch 6, **dadurch gekennzeichnet, dass** das poröse Dämpfungselement ein in Umlaufrichtung geschlossener oder geöffneter schallabsorbierender Schaumstoffring ist.

9. Fahrzeugluftreifen nach einem der vorherigen Ansprüche, **dadurch gekennzeichnet, dass** der Geräuschabsorber wenigstens ein Polyurethan enthält.

10. Verfahren zur Detektion eines Fahrzeugluftreifens gemäß Anspruch 1 zum Unterscheiden von Fahrzeugluftreifen aufweisend einen Geräuschabsorber (9) gegenüber Fahrzeugluftreifen ohne Geräuschabsorber, wobei der Geräuschabsorber (9) aufgrund des wenigstens einen Lumineszenzagenzes (10) auf der Oberfläche (9a) von einem Operator oder mittels eines Detektors detektiert wird.

11. Verfahren zum Recycling eines Fahrzeugluftreifens gemäß Anspruch 1, umfassend wenigstens die folgenden Verfahrensschritte:
A) Bereitstellung des Fahrzeugluftreifens gemäß Anspruch 1;
B) Durchführung des Verfahrens nach Anspruch 10;
C) Abtrennen des Geräuschabsorbers (9) von dem Fahrzeugluftreifen;
D) anschließende Zerkleinerung des Fahrzeugluftreifens ohne Geräuschabsorber.

12. Verfahren zum Recycling von Fahrzeugluftreifen umfassend wenigstens die folgenden Verfahrensschritte:
a) Bereitstellung von zu recycelnden Fahrzeugluftreifen;
b) Durchführung des Verfahrens nach Anspruch 10;
c) Räumliche Separation von Fahrzeugluftreifen aufweisend einen Geräuschabsorber (9) von Fahrzeugluftreifen ohne Geräuschabsorber (9);
d) Recycling von Fahrzeugluftreifen ohne Geräuschabsorber (9) umfassend die Zerkleinerung der Fahrzeugluftreifen;
e) Überführung von Fahrzeugluftreifen aufweisend einen Geräuschabsorber (9) zu einem separaten Recycling-Prozess umfassend das Abtrennen des Geräuschabsorbers (9) und erst die anschließende Zerkleinerung der Fahrzeugluftreifen.

## Claims

1. Pneumatic vehicle tire with at least one sound absorber (9) adhesively attached in its interior to the inner surface opposite the tread (1), wherein the sound absorber (9) has a radially inward-facing surface (9a),
**characterized in that** the radially inward-facing surface (9a) of the sound absorber (9) has at least one luminescent agent (10) applied to it.

2. Pneumatic vehicle tire according to Claim 1, **characterized in that** the luminescent agent is a fluorescent agent or phosphorescent agent.

3. Pneumatic vehicle tire according to either of the preceding claims,
**characterized in that** the luminescent agent absorbs light in the wavelength range from 200 to 700 nm and emits light in the wavelength range from 350 to 800 nm.

4. Pneumatic vehicle tire according to any of the preceding claims,
**characterized in that** the luminescent agent (10) has been applied to the surface (9a) of the sound absorber (9) by means of a dispersion, in particular suspension or emulsion, or a solution, wherein the dispersion or the solution contains from 1% to 80% by weight of luminescent agents.

5. Pneumatic vehicle tire according to any of the preceding claims,
**characterized in that** the luminescent agent (10) covers 0.01 % to 100% of the radially inward-facing surface (9a) of the sound absorber (9).

6. Pneumatic vehicle tire according to any of Claims 1 to 3, **characterized in that** the luminescent agent (10) is attached to the radially inward-facing surface (9a) of the sound absorber (9) as a constituent of a film.

7. Pneumatic vehicle tire according to any of the preceding claims,
**characterized in that** the at least one sound absorber (9) is at least one porous damping element.

8. Pneumatic vehicle tire according to Claim 6, **characterized in that** the porous damping element is a sound-absorbing foam ring closed or open in the circumferential direction.

9. Pneumatic vehicle tire according to any of the preceding claims,
**characterized in that** the sound absorber contains at least one polyurethane.

10. Process for detecting a pneumatic vehicle tire according to Claim 1 to distinguish pneumatic vehicle tires comprising a sound absorber (9) from pneumatic vehicle tires without a sound absorber, wherein the sound absorber (9) is detected by an operator or using a detector as a result of the at least one luminescent agent (10) on the surface (9a).

11. Process for recycling a pneumatic vehicle tire according to Claim 1, comprising at least the process steps of:
A) providing the pneumatic vehicle tire according to Claim 1;
B) performing the process according to Claim 10;
C) separating the sound absorber (9) from the pneumatic vehicle tire;
D) subsequently comminuting the pneumatic vehicle tire without the sound absorber.

12. Process for recycling pneumatic vehicle tires comprising at least the process steps of:
a) providing pneumatic vehicle tires to be recycled;
b) performing the process according to Claim 10;
c) spatially separating pneumatic vehicle tires comprising a sound absorber (9) from pneumatic vehicle tires without a sound absorber (9);
d) recycling pneumatic vehicle tires without sound absorbers (9) comprising comminution of the pneumatic vehicle tires;
e) transferring pneumatic vehicle tires comprising a sound absorber (9) to a separate recycling process comprising separation of the sound absorber (9) and comminution of the pneumatic vehicle tires only subsequently.

## Revendications

1. Pneumatique pour véhicule présentant au moins un absorbant sonore (9) appliqué par adhérence à l'intérieur dudit pneumatique sur la surface interne opposée à la bande de roulement (1), l'absorbant sonore (9) présentant une surface (9a) orientée radialement vers l'intérieur, **caractérisé en ce qu'**au moins un agent luminescent (10) est appliqué sur la surface (9a) orientée radialement vers l'intérieur de l'absorbant sonore (9).

2. Pneumatique pour véhicule selon la revendication 1, **caractérisé en ce que** l'agent luminescent est un agent fluorescent ou un agent phosphorescent.

3. Pneumatique pour véhicule selon l'une des revendications précédentes, **caractérisé en ce que** l'agent luminescent absorbe de la lumière dans la plage de longueurs d'onde de 200 à 700 nm et émet dans la plage de 350 à 800 nm.

4. Pneumatique pour véhicule selon l'une des revendications précédentes, **caractérisé en ce que** l'agent luminescent (10) est appliqué au moyen d'une dispersion, en particulier d'une suspension ou d'une émulsion, ou d'une solution sur la surface (9a) de l'absorbant sonore (9), la dispersion ou la solution contenant 1 à 80% en poids d'agents luminescents.

5. Pneumatique pour véhicule selon l'une des revendications précédentes, **caractérisé en ce que** l'agent luminescent (10) recouvre 0,01 à 100% de la surface (9a) orientée radialement vers l'intérieur de l'absorbant sonore (9).

6. Pneumatique pour véhicule selon l'une des revendications 1 à 3, **caractérisé en ce que** l'agent luminescent (10) est appliqué en tant que constituant d'une feuille sur la surface (9a) orientée radialement vers l'intérieur de l'absorbant sonore (9).

7. Pneumatique pour véhicule selon l'une des revendications précédentes, **caractérisé en ce que** ledit au moins un absorbant sonore (9) est au moins un élément d'amortissement poreux.

8. Pneu pour véhicule selon la revendication 6, **caractérisé en ce que** l'élément d'amortissement poreux est un anneau en mousse absorbant le bruit fermé ou ouvert dans la direction périphérique.

9. Pneumatique pour véhicule selon l'une des revendications précédentes, **caractérisé en ce que** l'absorbant sonore contient au moins un polyuréthane.

10. Procédé pour la détection d'un pneumatique pour véhicule selon la revendication 1 permettant de distinguer les pneumatiques pour véhicule présentant un absorbant sonore (9) par rapport à des pneumatiques pour véhicule sans absorbant sonore, l'absorbant sonore (9) étant détecté par un opérateur ou au moyen d'un détecteur en raison dudit au moins un agent luminescent (10) sur la surface (9a).

11. Procédé pour le recyclage d'un pneumatique pour véhicule selon la revendication 1, comprenant au moins les étapes de procédé suivantes :
A) mise à disposition du pneumatique pour véhicule selon la revendication 1 ;
B) mise en oeuvre du procédé selon la revendication 10 ;
C) séparation de l'absorbant sonore (9) et du pneumatique pour véhicule ;
D) broyage consécutif du pneumatique pour véhicule pour véhicule sans absorbant sonore.

12. Procédé pour le recyclage de pneumatiques pour véhicule, comprenant au moins les étapes de procédé suivantes :
a) mise à disposition de pneumatiques pour véhicule à recycler ;
b) mise en oeuvre du procédé selon la revendication 10 ;
c) séparation spatiale de pneumatiques pour véhicule présentant un absorbant sonore (9) et de pneumatiques sans absorbant sonore (9) ;
d) recyclage des pneumatiques sans absorbant sonore (9) comprenant le broyage des pneumatiques pour véhicule ;
e) transfert des pneumatiques pour véhicule présentant un absorbant sonore (9) vers un procédé de recyclage séparé comprenant la séparation de l'absorbant sonore (9) puis seulement broyage consécutif des pneumatiques pour véhicule.
